# EUROPEAN PATENT SPECIFICATION

(11) **EP 1 199 766 B1**
(45) Date of publication and mention of the grant of the patent: **28.05.2008**
(21) Application number: 01124312.8
(22) Date of filing: 19.10.2001
(51) Int. Cl.: H01M 10/40

(54) **Non-aqueous secondary battery having enhanced discharge capacity retention**
Nichtwässrigen Elektrolyten enthaltende Sekundärbatterie mit verbesserter Entladekapazitätspeicherung
Batterie secondaire à électrolyte nonaqueux et à rétention améliorée de la capacité de décharge

(30) Priority: 20.10.2000 JP 2000321146; 02.11.2000 JP 2000335946; 29.11.2000 JP 2000363656
(43) Date of publication of application: 24.04.2002
(73) Proprietor: Ube Industries, Ltd., Ube-shi, Yamaguchi-ken 755-8633 (JP)
(72) Inventor: Abe, Koji, Ube Chemical Factory, Ube-shi, Yamaguchi 755-8633 (JP); Ueki, Akira, Ube Chemical Factory, Ube-shi, Yamaguchi 755-8633 (JP); Hamamoto, Toshikazu, Ube Chemical Factory, Ube-shi, Yamaguchi 755-8633 (JP)
(74) Representative: Albrecht, Thomas

(56) References cited:
- US-A- 6 033 809
- PATENT ABSTRACTS OF JAPAN vol. 2000, no. 19, 5 June 2001 (2001-06-05) & JP 2001 052735 A (UBE IND LTD), 23 February 2001 (2001-02-23)
- DATABASE CA [Online] CHEMICAL ABSTRACTS SERVICE, COLUMBUS, OHIO, US; TSUKAHARA, JIRO ET AL: "Secondary nonaqueous electrolyte lithium batteries" retrieved from STN Database accession no. 128:194725 CA XP002275626 & JP 10 064591 A (FUJI PHOTO FILM CO., LTD., JAPAN) 6 March 1998 (1998-03-06)

## Description

### FIELD OF THE INVENTION

The present invention relates to a non-aqueous secondary battery having improved discharge capacity retention, and a non-aqueous electrolytic solution which is advantageously employable for the non-aqueous secondary battery.

### BACKGROUND OF THE INVENTION

At present, a non-aqueous secondary battery such as a lithium ion secondary battery is generally employed as an electric source for driving small electronic devices. The non-aqueous secondary battery comprises a positive electrode, a non-aqueous electrolytic solution, and a negative electrode. The non-aqueous lithium ion secondary battery preferably comprises a positive electrode of lithium complex oxide such as LiCoO₂, LiMn₂O₄, or LiNiO₂, a non-aqueous electrolytic solution such as a solution of electrolyte in a carbonate solvent such as ethylene carbonate (EC), propylene carbonate (PC), dimethyl carbonate (DMC), diethyl carbonate (DEC), or methyl ethyl carbonate (MEC), and a negative electrode of carbonaceous material or lithium metal.

The non-aqueous secondary battery preferably has good battery characteristics such as large electric discharge capacity and high electric discharge retention. However, there are observed certain problems in the known non-aqueous secondary battery. For instance, in the non-aqueous lithium ion secondary battery using a positive electrode of LiCoO₂, LiMn₂O₄, or LiNiO₂, oxidative decomposition of a portion of the non-aqueous electrolytic solution undergoes in the electric charging stage. The decomposition product disturbs electrochemical reaction so that the electric discharge capacity decreases. It is considered that the oxidative decomposition is caused in the non-aqueous solvent of the non-aqueous electrolytic solution on the interface between the positive electrode and the electrolytic solution.

Moreover, in the non-aqueous lithium ion secondary battery particularly using negative electrode of carbonaceous material of high crystallinity such as natural graphite or artificial (or synthetic) graphite, reductive decomposition of the solvent of the non-aqueous electrolytic solution undergoes on the surface of the negative electrode in the charging stage. The reductive decomposition on the negative electrode undergoes after repeated charging-discharging procedures even in the case of using ethylene carbonate (EC) which is a preferably employable solvent of the electrolytic solution.

Japanese Patent Provisional Publication No. 10-247517 describes incorporation of a phenolic oxidation inhibitor, a phosphite oxidation inhibitor, or a sulfide oxidation inhibitor into a non-aqueous electrolytic solution of a secondary battery to keep the battery from abnormal exothermic reaction caused in the case of over-charging or formation of short circuit.

Recently, the non-aqueous secondary battery is sometimes employed to work under very severe conditions such as that the charge-discharge procedure to reach a work voltage higher than 4.2 V, for instance 4.25 V or 4.3 V, is repeated at a high temperature such as 40°C or higher for a long period of time.

### SUMMARY OF THE INVENTION

It is an object of the present invention to provide a non-aqueous secondary battery showing improved discharge capacity retention.

It is another object of the invention to provide a non-aqueous secondary battery showing high discharge capacity retention even when it is used for a long period of time under severe conditions such as a high working voltage and a high temperature.

It is a further object of the invention to provide a non-aqueous electrolytic solution which is advantageously employable for preparing a non-aqueous secondary battery showing satisfactory discharge capacity retention, particularly even when it is used to work for a long period of time under severe conditions such as a high working voltage and a high temperature.

The present invention resides in a non-aqueous secondary battery which comprises a positive electrode, a negative electrode, a separator, and an electrolytic solution which contains a substituted diphenyldisulfide derivative having the formula: 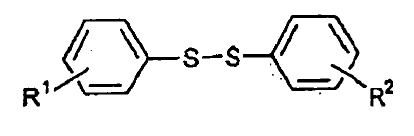 wherein each of R¹ and R² independently represents an alkoxy group having 1 to 6 carbon atoms, an alkenyloxy group halving 2 to 6 carbon atoms, an alkynyloxy group having 2 to 6 carbon atoms, a cycloalkyloxy having 3 to 6 carbon atoms, an aryloxy group having 6 to 12 carbon atoms, an aralkyloxy group having 7 to 15 carbon atoms, an acyloxy group having 2 to 7 carbon atoms, an alkanesulfonyloxy group having 1 to 7 carbon atoms, an arylsulfonyloxy group halving 6 to 10 carbon atoms, an alkoxycarbonyloxy group having 2 to 7 carbon atoms, a halogen atom, CF₃, CCl₃, or CBr₃,
in an amount of 0.001 to 5 weight % based on the amount of the electrolytic solution, and an additive compound selected from the group consisting of methyl 2-propynylcarbonate, 2-propynyl methanesulfonate, 1,3-propanesultone, divinylsulfone, and 1,4-butanediol dimethanesulfonate, in an amount of 0.01 to 10 weight % based on the amount of the electrolytic solution or cyclohexylbenzene in an amount of 0.1 to 5 weight % based on the amount of the electrolytic solution.

The invention further provides a non-aqueous electrolytic solution containing a substituted diphenyldisulfide derivative having the following formula: 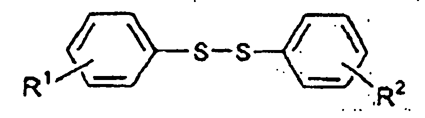 wherein each of R¹ and R² independently represents an alkoxy group having 1 to 6 carbon atoms, an alkenyloxy group having 2 to 6 carbon atoms, an alkynyloxy group having 2 to 6 carbon atoms, a cycloalkyloxy having 3 to 6 carbon atoms, as aryloxy group having 6 to 12 carbon atoms, an aralkyloxy group having 7 to 15 carbon atoms, an acyloxy group having 2 to 7 carbon atoms, an alkanesulfonyloxy group having 1 to 7 carbon atoms, an arylsulfonyloxy group having 6 to 10 carbon atoms, an alkoxycarbonyloxy group having 2 to 7 carbon atoms , a halogen atom, CF₃, CCl₃, or CBr₃,
in an amount of 0.001 to 5 weight % based on the amount of the electrolytic solution, and an additive compound selected from the group consisting of methyl 2-propynylcarbonate, 2-propynyl methanesulfonate, 1, 3-propanesultone, divinylsulfone, and 1,4-butanediol dimethanesulfonate, in an amount of 0.01 to 10 weight % based on the amount of the electrolytic solution or cyclohexylbenzene in an amount of 0.1 to 5 weight % based on the amount of the electrolytic solution.

### DETAILED DESCRIPTION OF THE INVENTION

The present invention is described below in more detail.

The present invention is characteristic by incorporation of a substituted diphenyldisulfide derivative of the formula (I) into a non-aqueous electrolytic solution containing electrolyte so that the electric discharge capacity retention can be enhanced. Various known materials are employed for constituting the non-aqueous secondary battery of the invention.

### [Substituted Diphenyldisulfide Derivative]

The substituted diphenyldisulfide derivative of the invention has the following formula (I):

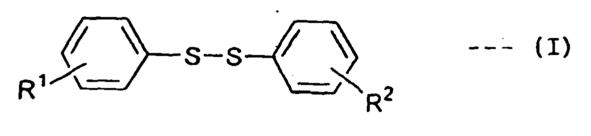

In the formula (I), each of R¹ and R² independently represents an alkoxy group having 1 to 6 carbon atoms (e.g., methoxy, ethoxy, propoxy, butoxy, pentyloxy, hexyloxy, isopropoxy, isobutoxy, or isopentyloxy), an alkenyloxy group having 2 to 6 carbon atoms (e.g., vinyloxy, 1-propenyloxy, or allyloxy), an alkynyloxy group having 2 to 6 carbon atoms (e.g., ethynyloxy or 2-propinyloxy), a cycloalkyloxy having 3 to 6 carbon atoms (e.g., cyclopropyloxy or cyclohexyloxy), an aryloxy group having 6 to 15 carbon atoms (e.g., phenyloxy or p-tolyloxy), an aralkyloxy group having 7 to 15 carbon atoms (e.g., benzyloxy or phenethyloxy), an acyloxy group having 2 to 7 carbon atoms (e.g., acetyloxy, propionyloxy, acryloyloxy, or benzoyloxy), an alkanesulfonyloxy group having 1 to 7 carbon atoms (e.g., methanesulfonyloxy or ethanesulfonyloxy), an arylsulfonyloxy group having 6 to 10 carbon atoms (e.g., benzenesulfonyloxy), an alkoxycarbonyloxy group having 2 to 7 carbon atoms (e.g., methoxycarbonyloxy or ethoxycarbonyloxy), an aryloxycarbonyloxy group (e.g., phenoxycarbonyloxy or benzyloxycarbonyloxy), a halogen atom (e.g., F, Cl, Br, or I), CF₃, CCl₃, or CBr₃.

The substituents R¹, R² can be attached to any possible positions of the phenyl ring. Preferably, each of R¹ and R² is attached to the phenyl ring in the 4-position. Representative examples of the substituted diphenyldisulfide derivatives of the formula (I) include bis(4-methoxyphenyl)disulfide (R¹ = R² = methoxy), bis(3-methoxyphenyl)disulfide (R¹ = R² = methoxy), bis(2-methoxyphenyl)disulfide (R¹ = R² = methoxy), bis(4-ethoxyphenyl) disulfide (R¹ = R² = ethoxy), bis(4-isopropoxyphenyl) disulfide (R¹ = R² = isopropoxy), bis(4-cyclohexyloxyphenyl) disulfide (R¹ = R² = cyclohexyloxy), bis(4-allyloxyphenyl)disulfide (R¹ = R² = allyloxy), bis[4-(2-propinyloxy)phenyl)disulfide (R¹ = R² = 2-propinyloxy), bis (4-phenoxyphenyl) disulfide (R¹ = R² = phenoxy), bis(4-acetoxyphenyl)disulfide (R¹ = R² = acetoxy), bis(4-benzoyloxyphenyl) disulfide (R¹ = R² = benzoyloxy), bis(4-methanesulfonyloxyphenyl)disulfide (R¹ = R² = methanesulfonyloxy), bis(4-benzenesulfonyloxyphenyl)disulfide (R¹ = R² = benzenesulfonyloxy), bis(4-methoxycarbonyloxyphenyl)-disulfide (R¹ = R² = methoxycarbonyloxy), bis(4-phenoxycarbonyloxyphenyl)disulfide (R¹ = R² = phenoxycarbonyloxy), bis(4-fluorophenyl)disulfide (R¹ = R² = F), bis (4-chlorophenyl)disulfide (R¹ = R² = Cl), bis(4-bromophenyl)-disulfide (R¹ = R² = Br), bis(4-iodophenyl)disulfide (R¹ = R² = I), bis(4-trifluoromethylphenyl)disulfide (R¹ = R² = CF₃), bis(4-trichloromethylphenyl)disulfide (R¹ = R² = CCl₃), and bis(4-tribromomethylphenyl)disulfide (R¹ = R² = CBr₃).

The substituted diphenyldisulfide of the formula (I) provides improved characteristics such as enhanced discharge capacity retention to a non-aqueous secondary battery when it is incorporated into its non-aqueous electrolytic solution. The improvement of the invention is more prominent than the case in which diphenyldisulfide (namely, unsubstituted diphenyldisulfide) is incorporated into its non-aqueous electrolytic solution. It is considered that the substituent which contains an atom having an unshared electron pair such as oxygen or halogen supplies electrons from the atom having an unshared electron pair to the positive electrode of the battery when it is charged, whereby smooth oxidative reaction undergoes.

Moreover, the substituted diphenyldisulfide of the aforementioned formula (I) is superior in its solubility in an electrolytic solution to the unsubstituted diphenyldisulfide.

The amount of the diphenyldisulfide derivative of the formula (I) can be in the range of 0.001 to 5 weight % based on the amount of the non-aqueous electrolytic solution. However, it is generally preferred to incorporate the diphenyldisulfide derivative in an amount of 0.001 to 1 weight %, more preferably 0.01 to 0.7 weight %, most preferably 0.03 to 0.5 weight %, based on the amount of the non-aqueous electrolytic solution, so that the discharge capacity retention is further enhanced.

It has been further discovered by the inventors that the discharge capacity retention of a non-aqueous electrolytic solution is further enhanced by incorporating into the solution one or more of specific additive compounds such as methyl 2-propynylcarbonate, 2-propynyl methanesulfonate, 1,3-propanesultone, divinylsulfone, and 1,4-butanediol dimethanesulfonate, in combination with a substituted diphenyldisulfide derivative of the formula (I). The enhancement of the discharge capacity retention by the use of the combination of the specific additive compound and a diphenyldisulfide derivative of the formula (I) is particularly effective when a non-aqueous secondary battery is employed under very severe conditions such as that the charge-discharge procedure to reach a work voltage higher than 4.2 V, for instance 4.25 V or 4.3 V, is repeated at a high temperature such as 40°C or higher (e.g., 40 to 60°C) for a long period of time. The cut-off voltage can be set to 2.0 V or higher, or 2.5 V or higher. The non-aqueous secondary battery employing the above-mentioned additive combination can be employed with a continuous current discharge under 0.1 to 3C, in a wide temperature range such as from -40°C to 100°C.

The addition of the above-mentioned additive compounds into a non-aqueous electrolytic solution per se has been already known. However, it has been not known that the combination of the additive compound with a diphenyldisulfide derivative of the formula (I) is effective to prominently enhance the discharge capacity retention of a non-aqueous electrolytic solution in a non-aqueous secondary battery.

In the combination, the additive compound is employed in an amount of 0.01 to 10 weight %, more preferably 0.05 to 5 weight %, most preferably 0.1 to 4 weight %, based on the amount of the electrolytic solution.

It has been furthermore discovered by the inventors that the incorporation of cyclohexylbenzene in combination with a diphenyldisulfide derivative of the formula (I) into a non-aqueous electrolytic solution is effective to keep a non-aqueous secondary battery using the electrolytic solution from excessive heat generation caused by over-charge after the repeated charge-discharge procedure for a long period of time, such as 300 cycle charge-discharge procedure.

In the combination, the cyclohexylbenzene is employed in an amount of 0.1 to 5 weight %, more preferably 0.5 to 3 weight %, based on the amount of the electrolytic solution.

It is preferred that the additive composition comprises a diphenyldisulfide derivative of the formula (I), the aforementioned additive compound, and cyclohexylbenzene, because such combination is effective to enhance the charge discharge retention characteristics under severe conditions of a non-aqueous secondary battery and further to provide to the battery increased resistance to excessive heat generation which is possibly caused when it is over-charged after a repeated charge-discharge procedure of a long period of time.

There are no specific limitations with respect to the non-aqueous solvent for the preparation of the electrolytic solution. The non-aqueous solvent is generally selected from known non-aqueous solvents for the preparation of non-aqueous electrolytic solutions.

Examples of the non-aqueous solvents include ethylene carbonate (EC), propylene carbonate (PC), butylene carbonate (BC), vinylene carbonate (VC), dimethyl carbonate (DMC), methyl ethyl carbonate (MEC), methyl isopropyl carbonate (MiPC), methyl isobutyl carbonate (MiBC), diethyl carbonate (DEC), diisopropyl carbonate, diisobutyl carbonatetetrahydrofuran, 2-methyltetrahydrofuran, 1,4-dioxane, 1,2-dimethoxyethane, 1,2-diethoxyethane, 1,2-dibutoxyethane, γ-butyrolactone, acetonitrile, methyl propionate, and dimethylformamide. The non-aqueous solvents can be employed singly or in combination.

The non-aqueous solvents preferably are a mixture of a cyclic carbonate and a linear chain carbonate and a mixture of a cyclic carbonate and a lactone.

Examples of the electrolytes to be incorporated into the non-aqueous solvent include LiPF₆, LiBF₄, LiAsF₆, LiClO₄, LiN(SO₂CF₃)₂, LiN(SO₂C₂F₅)₂, LiC(SO₂CF₃)₃, LiPF₄(CF₃)₂, LiPF₃(CF₃)₃, LiPF₃(C₂F₅)₃, LiPF₅(iso-C₃F₇), and LiPF₄(iso-C₃F₇)₂. The electrolytes can be employed singly or in combination. Generally, the electrolyte can be incorporated into the non-aqueous solvent in such an amount to give an electrolytic solution of 0.1 M to 3 M, preferably 0.5 M to 1.5 M.

The non-aqueous secondary battery of the invention comprises a positive electrode and a negative electrode in addition to the non-aqueous electrolytic solution containing the substituted diphenyldisulfide derivative of the formula (I) and, optionally one or more additive compounds.

The positive electrode generally comprises a positive electrode active material and an electro-conductive binder composition.

The positive electrode active material preferably is a complex metal oxide containing one metal element selected from the group consisting of cobalt, manganese, nickel, chromium, iron, and vanadium and a lithium element. Examples of the complex metal oxides include LiCoO₂**,** LiMn₂O₄, LiNiO₂, and LiCO₁₋ₓNiₓO₂ (0.01<x<1).

The electro-conductive binder composition can be produced by a mixture of an electro-conductive material such as acetylene black or carbon black, a binder such as poly(tetrafluoroethylene) (PTFE), poly(vinylidene fluoride) (PVDF), styrene-butadiene copolymer (SBR), acrylonitrile-butadiene copolymer (NBR) or carboxymethylcellulose (CMC), and a solvent. For the preparation of a positive electrode, the mixture is coated on a metal plate such as aluminum foil or stainless plate, dried, and pressed for molding. The molded product is then heated in vacuo at a temperature of approx. 50 to 250°C for approx. 2 hours, to give the desired positive electrode.

The negative electrode comprises a negative electrode active material such as a lithium metal, a lithium alloy, carbonaceous material having a graphite-type crystalline structure which can absorb and release lithium ion, or a complex tin oxide. Examples of the carbonaceous materials include thermally decomposed carbonaceous materials, cokes, graphites (e.g., artificial graphite and natural graphite), fired organic polymer materials, and carbon fibers. Preferred are carbonaceous materials having a graphite-type crystalline structure in which the lattice distance of lattice surface (002), namely, d₀₀₂, is in the range of 3.35 to 3.40 angstrom. The negative electrode active material in the powdery form such as carbonaceous powder is preferably used in combination with a binder such as ethylene propylene diene terpolymer (EPDM), polytetrafluoroethylene (PTFE), poly(vinylidene fluoride) (PVDF), styrene-butadiene copolymer (SBR), acrylonitrile-butadiene copolymer (NBR) or carboxymethylcellulose (CMC).

There are no specific limitations with respect to the structure of the non-aqueous secondary battery of the invention. For instance, the non-aqueous secondary battery can be a battery of coin type comprising a positive electrode, a negative electrode, and single or plural separators, or a cylindrical or prismatic battery comprising a positive electrode, a negative electrode, and a separator roll. A polymer battery also can be prepared. The separator can be a known microporous polyolefin film, woven fabric, or non-woven fabric.

The present invention is further described by the following non-limiting examples.

### [Example 1]

### 1) Preparation of non-aqueous electrolytic solution

In a non-aqueous mixture of ethylene carbonate and methyl ethyl carbonate [EC:MEC=3:7, volume ratio] was dissolved LiPF₆ to give a non-aqueous electrolytic solution of 1 M concentration. To the electrolytic solution were added bis(4-methoxyphenyl)disulfide and divinylsulfone in amounts of 0.2 wt.% and 0.5 wt.% (based on the amount of the electrolytic solution), respectively.

### 2) Preparation of lithium secondary battery and measurement of its battery characteristics

LiCoO₂ (positive electrode active material, 90 wit.%;), acetylene black (electro-conductive material, 5 wt.%), and poly(vinylidene fluoride) (binder, 5 wt.%) were mixed. To the resulting mixture was further added 1-methyl-2-pyrrolidone (solvent). Thus produced positive electrode mixture was coated on aluminum foil, dried, molded under pressure, and heated to give a positive electrode.

Artificial graphite (negative electrode active material, 95 wt.%) and poly(vinylidene fluoride) (binder, 5 wt.%) were mixed. To the resulting mixture was further added 1-methyl-2-pyrrolidone (solvent). Thus produced negative electrode mixture was coated on copper foil, dried, molded under pressure, and heated to give a negative electrode.

The positive and negative electrodes, a microporous polypropylene film separator, and the non-aqueous electrolytic solution were combined to give a cylinder-type battery (diameter: 18 mm, thickness: 65 mm).

The cylinder-type battery was charged at an elevated temperature (45°C) with a constant electric current (1.45 A, 1C) to reach 4.3 V and then the charging was continued under a constant voltage of 4.3 V. In total, the charging was performed for 3 hours. Subsequently, the battery was discharged to give a constant electric current (1.45 A, 1C). The discharge was continued to give a terminal voltage of 2.75 V. The charge-discharge cycle was repeated 300 times.

The initial discharge capacity was 1.04 times as much as that measured in a battery using an EC/MEC (3/7) solvent mixture (containing no diphenyldisulfide derivative) [see Comparison Example 1].

After the 300 cycle charge-discharge procedure, the discharge capacity was 83.5% of the initial discharge capacity. Thus, high temperature characteristics were satisfactory.

The preparation and evaluation of the battery are summarized in Table 1.

### [Comparison example 1]

The procedures for the preparation of non-aqueous electrolytic solution of Example 1 were repeated except for using no diphenyldisulfide. Thus prepared non-aqueous electrolytic solution was employed for the manufacture of battery of cylinder-type in the same manner as in Example 1.

The preparation and evaluation of the battery are summarized in Table 1.

### [Comparison examples 2 to 5]

The procedures for the preparation of non-aqueous electrolytic solution of Example 1 were repeated except for replacing the divinylsulfone with other additive compound (set forth in Table 1) and using no diphenyldisulfide. Thus prepared non-aqueous electrolytic solution was employed for the manufacture of battery of cylinder-type in the same manner as in Example 1.

The preparation and evaluation of the battery are summarized in Table 1.

### [Examples 2 to 4]

The procedures for the preparation of non-aqueous electrolytic solution of Example 1 were repeated except for replacing the bis(4-methoxyphenyl)disulfide with other substituted diphenyldisulfide (set forth in Table 1) and using no divinylsulfone. Thus prepared non-aqueous electrolytic solution was employed for the manufacture of battery of cylinder-type in the same manner as in Example 1.

The preparation and evaluation of the battery are summarized in Table 1, wherein Examples 2 to 4 are not according to the invention.

**Table 1**

| Example | Disulfide derivative (wt.%) | Other additive compound (wt.%) | Initial discharge capacity | Discharge capacity retention (300 cycles) |
|---|---|---|---|---|
| Ex.1 | Bis(4-methoxyphenyl)disulfide (0.2) | Divinylsulfone (0.5) | 1.04 | 83.5% |
| Com.1 | None | Divinylsulfone (0.5) | 1.00 | 76.7% |
| Com.2 | None | 1,3-Propanesultone (2) | 1.00 | 77.2% |
| Com.3 | None | 1,3-Butanediol dimethanesulfonate (1) | 1.00 | 75.30% |
| Com.4 | None | Methyl 2-propynyl carbonate (2) | 1.00 | 74.8% |
| Com.5 | None | 2-Propynyl methanesulfonate (2) | 1.00 | 75.5% |
| Ex.2 | Bis(4-methoxyphenyl)disulfide (0.2) | None | 1.02 | 78.6% |
| Ex.3 | Bis(4-ethoxyphenyl) disulfide (0.2) | None | 1.01 | 78.1% |
| Ex.4 | Bis(4-chlorophenyl)disulfide (0.2) | None | 1.00 | 77.6% |

| | | | | |
|---|---|---|---|---|
| Remark: The initial discharge capacity was a relative value based on that measured in Comparison Example 1. | | | | |

### [Examples 5 to 10]

The procedures for the preparation of non-aqueous electrolytic solution of Example 1 were repeated except for replacing the bis(4-methoxyphenyl)disulfide with other substituted diphenyldisulfide and/or replacing the divinylsulfone with other additive compound (set forth in Table 2). Further, a non-aqueous mixture of ethylene carbonate and diethyl carbonate [EC:DEC=3:7, volume ratio] was employed. Thus prepared non-aqueous electrolytic solution was employed for the manufacture of battery of cylinder-type in the same manner as in Example 1.

The preparation and evaluation of the battery are summarized in Table 2.

**Table 2**

| Example | Disulfide derivative (wt.%) | Other additive compound (wt.%) | Initial discharge capacity | Discharge capacity retention (300 cycles) |
|---|---|---|---|---|
| Ex.5 | Bis(4-ethoxyphenyl)disulfide (0.2) | Divinylsulfone (0.5) | 1.04 | 83.1% |
| Ex.6 | Bis(4-chlorophenyl)disulfide (0.2) | Divinylsulfone (0.5) | 1.03 | 82.8% |
| Ex.7 | Bis(4-methoxyphenyl)disulfide (0.2) | 1,3-Propanesultone (2) | 1.04 | 83.7% |
| Ex.8 | Bis(4-methoxyphenyl)disulfide (0.2) | 1,4-Butanediol dimethanesulfonate (1) | 1.04 | 83.2% |
| Ex.9 | Bis(4-methoxyphenyl)disulfide (0.2) | Methyl 2-propynyl carbonate (2) | 1.04 | 82.5% |
| Ex.10 | Bis(4-methoxyphenyl)disulfide (0.2) | 2-Propynyl methanesulfonate (2) | 1.04 | 83.3% |

| | | | | |
|---|---|---|---|---|
| Remark: The initial discharge capacity was a relative value based on that measured in Comparison Example 1. | | | | |

### [Example 11]

The procedures for the preparation of non-aqueous electrolytic solution of Example 1 were repeated except for replacing the artificial graphite with natural graphite and employing a non-aqueous mixture of ethylene carbonate, methyl ethyl carbonate and diethyl carbonate [EC:MEC:DEC=3:5:2, volume ratio]. Thus prepared non-aqueous electrolytic solution was employed for the manufacture of battery of cylinder-type in the same manner as in Example 1.

The initial discharge capacity (relative value) was 1.04, and the discharge capacity after the 300 charge-discharge procedure was 83.7% of the initial discharge capacity.

### [Example 12]

The procedures for the preparation of non-aqueous electrolytic solution of Example 1 were repeated except for replacing the LiCoO₂ (positive electrode active material) with LiNi_{0.8}Co_{0.2}O₂ and employing a non-aqueous mixture of ethylene carbonate, methyl ethyl carbonate and diethyl carbonate [EC:MEC:DEC=3:5:2, volume ratio]. Thus prepared non-aqueous electrolytic solution was employed for the manufacture of battery of cylinder-type in the same manner as in Example 1.

The initial discharge capacity (relative value) was 1.19, and the discharge capacity after the 300 charge-discharge procedure was 81.3% of the initial discharge capacity.

### [Example 13]

The procedures for the preparation of non-aqueous electrolytic solution of Example 1 were repeated except for replacing the LiCoO₂ (positive electrode active material) with LiMn₂O₄, replacing 0.5 wt.%.of divinylsulfone with 2 wt.% of 1,3-propanesultone, and employing a non-aqueous mixture of ethylene carbonate, methyl ethyl carbonate and diethyl carbonate [EC:MEC:DEC=3:5:2, volume ratio]. Thus prepared non-aqueous electrolytic solution was employed for the manufacture of battery of cylinder-type in the same manner as in Example 1.

The initial discharge capacity (relative value) was 0.85, and the discharge capacity after the 300 charge-discharge procedure was 82.3% of the initial discharge capacity.

### [Comparison Example 6]

The procedures for the preparation of non-aqueous electrolytic solution of Example 12 were repeated except for employing no diphenyldisulfide derivative. Thus prepared non-aqueous electrolytic solution was employed for the manufacture of battery of cylinder-type in the same manner as in Example 1.

The initial discharge capacity (relative value) was 1.16, and the discharge capacity after the 300 charge-discharge procedure was 75.5% of the initial discharge capacity.

### [Comparison Example 7]

The procedures for the preparation of non-aqueous electrolytic solution of Example 13 were repeated except for employing no diphenyldisulfide derivative. Thus prepared non-aqueous electrolytic solution was employed for the manufacture of battery of cylinder-type in the same manner as in Example 1.

The initial discharge capacity (relative value) was 0.85, and the discharge capacity after the 300 charge-discharge procedure was 76.7% of the initial discharge capacity.

### [Example 14]

### 1) Preparation of non-aqueous electrolytic solution

In a non-aqueous mixture of ethylene carbonate, propylene carbonate and diethyl carbonate [EC:PC:DEC= 30:5:65, volume ratio] was dissolved LiPF₆ to give a non-aqueous electrolytic solution of 1 M concentration. To the electrolytic solution were added bis(4-methoxyphenyl)disulfide and cyclohexylbenzene in amounts of 0.2 wt.% and 3 wt.% (based on the amount of the electrolytic solution), respectively.

### 2) Preparation of lithium secondary battery and measurement of its battery characteristics

LiCoO₂ (positive electrode active material, 90 wit.%), acetylene black (electro-conductive material, 5 wit.%), and poly(vinylidene fluoride) (binder, 5 wit.%) were mixed. To the resulting mixture was further added 1-methyl-2-pyrrolidone (solvent). Thus produced positive electrode mixture was coated on aluminum foil, dried, molded under pressure, and heated to give a positive electrode.

Artificial graphite (negative electrode active material, 95 wt.%) and poly(vinylidene fluoride) (binder, 5 wt.%) were mixed. To the resulting mixture was further added 1-methyl-2-pyrrolidone (solvent). Thus produced negative electrode mixture was coated on copper foil, dried, molded under pressure, and heated to give a negative electrode.

The positive and negative electrodes, a microporous polypropylene film separator, and the non-aqueous electrolytic solution were combined to give a cylinder-type battery (diameter: 18 mm, thickness: 65 mm). To the battery were attached a pressure relief valve and an internal current cut-out device.

The cylinder-type battery was charged at an elevated temperature (45°C) with a constant electric current (1.45 A, 1C) to reach 4.25 V and then the charging was continued under a constant voltage of 4.25 V. In total, the charging was performed for 3 hours. Subsequently, the battery was discharged to give a constant electric current (1.45 A, 1C). The discharge was continued to give a terminal voltage of 2.7 V. The charge-discharge cycle was repeated 300 times.

The initial discharge capacity was equal to that measured in a battery using the EC/PC/DEC= 30/5/65 solvent mixture (containing no substituted diphenyldisulfide derivative) [see Comparison Example 8].

After the 300 cycle charge-discharge procedure, the discharge capacity was 84.3% of the initial discharge capacity. Thus, high temperature characteristics were satisfactory.

The cylinder-type battery having been subjected to the 300 cycle charge-discharge procedure was then subjected to an over-charge test under the condition that the battery was fully charged and then continuously charged at an ambient temperature (20°C) with a constant electric current (2.9 A, 2C) until the internal current cut-out device operated.

The over-charging current was cut out at 16 min. The highest temperature on the battery surface measured after the current was cut-out was 79°C.

### [Example 15]

The procedures for the preparation of non-aqueous electrolytic solution of Example 14 were repeated except for replacing 0.2 wt.% of the bis(4-methoxyphenyl)disulfide with 0.3 wt.% of bis(4-ethoxyphenyl)disulfide and changing the amount of cyclohexylbenzene from 3 wt.% to 2 wt.%. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 84.1%
Time of over-charging cut-out: 17 min.
Highest temperature after current cut-out: 84°C.

### [Example 16]

The procedures for the preparation of non-aqueous electrolytic solution of Example 14 were repeated except for replacing the bis(4-methoxyphenyl)disulfide with bis(4-chlorophenyl)disulfide and changing the amount of cyclohexylbenzene from 3 wt.% to 2 wt.%. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 83.4%
Time of over-charging cut-out: 17 min.
Highest temperature after current cut-out: 84°C.

### [Comparison Example 8]

The procedures for the preparation of non-aqueous electrolytic solution of Example 14 were repeated except for using neither bis(4-methoxyphenyl)disulfide nor cyclohexylbenzene. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 77.2%
Time of over-charging cut-out: 28 min.
Highest temperature after current cut-out: Generation of heat did not cease.

### [Example 17 - not according to the invention]

The procedures for the preparation of non-aqueous electrolytic solution of Example 14 were repeated except for using no cyclohexylbenzene. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 81.8%
Time of over-charging cut-out: 28 min.
Highest temperature after current cut-out: Generation of heat did not cease.

### [Comparison Example 9]

The procedures for the preparation of non-aqueous electrolytic solution of Example 14 were repeated except for using no bis(4-methoxyphenyl)disulfide. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 77.1%
Time of over-charging cut-out: 17 min.
Highest temperature after current cut-out: 85°C.

### [Example 18]

The procedures for the preparation of non-aqueous electrolytic solution of Example 14 were repeated except for replacing the artificial graphite with natural graphite. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 84.2%
Time of over-charging cut-out: 16 min.
Highest temperature after current cut-out: 79°C.

### [Example 19]

The procedures for the preparation of non-aqueous electrolytic solution of Example 14 were repeated except for replacing LiCoO₂ (positive electrode active material) with LiNi_{0.8}Co_{0.2}O₂. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 83.3%
Time of over-charging cut-out: 18 min.
Highest temperature after current cut-out: 85°C.

### [Comparison Example 10]

The procedures for the preparation of non-aqueous electrolytic solution of Example 14 were repeated except for replacing LiCoO₂ (positive electrode active material) with LiNi_{0.8}Co_{0.2}O₂ and using no bis(4-methoxyphenyl)disulfide. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 75.3%
Time of over-charging cut-out: 18 min.
Highest temperature after current cut-out: 85°C.

### [Example 20 - not according to the invention]

The procedures for the preparation of non-aqueous electrolytic solution of Example 14 were repeated except for replacing LiCoO₂ (positive.electrode active material) with LiNi_{0.8}Co_{0.2}O₂ and using no cyclohexylbenzene. Thus prepared non-aqueous electrolytic solution was employed for the manufacture of battery of cylinder-type in the same manner as in Example 14.

The evaluation of the battery showed the following value:
Discharge capacity retention after 300 cycle charge-discharge procedure: 77.6%
Time of over-charging cut-out: 28 min.
Highest temperature after current cut-out: Generation of heat did not cease.

### [Example 21 - not according to the invention]

The procedures for the preparation of non-aqueous electrolytic solution of Example 14 were repeated except for using a non-aqueous mixture of ethylene carbonate, propylene carbonate, vinylene carbonate and diethyl carbonate [EC:PC:VC:DEC= 25:8:2:65, volume ratio]. Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 83.7%
Time of over-charging cut-out: 17 min.
Highest temperature after current cut-out: 85°C.

### [Examples 22 to 27]

The procedures for the preparation of non-aqueous electrolytic solution of Example 21 were repeated except for further adding to the electrolytic solution, 0.5 wt.% of divinylsulfone (Example 22), 1 wt.% of 2-propynyl methanesulfonate (Example 23), 2 wt.% of methyl 2-propynylcarbonate (Example 24), 2 wt.% of 2-butyne-1,4-diol dimethylcarbonate (Example 25), 3 wt.% of 1,3-propanesultone (Example 26), or 4 wt.% of 1,4-butanediol dimethanesulfonate (Example 27) .

Thus prepared non-aqueous electrolytic solution was employed for the manufacture of battery of cylinder-type in the same manner as in Example 14.

The evaluation of the battery showed the following values:
Discharge capacity retention after 300 cycle charge-discharge procedure: 84.5% (Ex. 22), 84.4 (Ex. 23), 84.0 (Ex. 24), 83.9% (Ex. 25), 84.8% (Ex. 26), 84.3 (Ex. 27)
Time of over-charging cut-out: 17 min. (all Examples)
Highest temperature after current cut-out: 85°C (all Examples).

## Claims

1. A non-aqueous secondary battery which comprises a positive electrode, a negative electrode, a separator, and an electrolytic solution which contains a substituted diphenyldisulfide derivative having the formula: 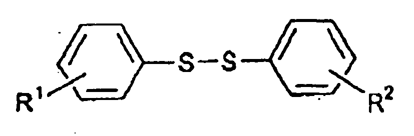 wherein each of R¹ and R² independently represents an alkoxy group having 1 to 6 carbon atoms, an alkenyloxy group having 2 to 6 carbon atoms, an alkynyloxy group having 2 to 6 carbon atoms, a cycloalkyloxy having 3 to 6 carbon atoms, an aryloxy group having 6 to 12 carbon atoms, an aralkyloxy group having 7 to 15 carbon atoms, an acyloxy group having 2 to 7 carbon atoms, an alkanesulfonyloxy group having 1 to 7 carbon atoms, an arylsulfonyloxy group having 6 to 10 carbon atoms, an alkoxycarbonyloxy group having 2 to 7 carbon atoms, a halogen atom, CF₃, CCl₃, or CBr₃,
in an amount of 0. 001 to 5 weight % based on the amount of the electrolytic solution, and an additive compound selected from the group consisting of methyl 2-propynylcarbonate, 2-propynyl methanesulfonate, 1,3-propanesultone, divinylsulfone, and 1,4-butanediol dimethanesulfonate, in an amount of 0.01 to 10 weight % based on the amount of the electrolytic solution or cyclohexylbenzene in an amount of 0.1 to 5 weight % based on the amount of the electrolytic solution.

2. The non-aqueous secondary battery of claim 1, in which each of R¹ and R² is an alkoxy group having 1 to 6 carbon atoms.

3. The non-aqueous secondary battery of claim 1 or 2, wherein the negative electrode comprises natural graphite or artificial graphite.

4. The non-aqueous secondary battery of any one of claims 1 to 3, wherein the natural or artificial graphite has a lattice plane of (002) having a plane distance in term of d₀₀₂ in a length of 0.335 to 0.340 nm.

5. A non-aqueous electrolytic solution containing a substituted dipbenyldisulfide derivative having the following formula: 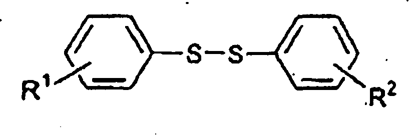 wherein each of R¹ and R² independently represents an alkoxy group having 1 to 6 carbon atoms, an alkenyloxy group having 2 to 6 carbon atoms, an alkynyloxy group having 2 to 6 carbon atoms, a cycloalkyloxy having 3 to 6 carbon atoms, an acyloxy group having 6 to 12 carbon atoms, an aralkyloxy group having 7 to 15 carbon atoms, an aryloxy group having 2 to 7 carbon atoms, an alkanesulfonyloxy group having 1 to 7 carbon atoms, an axylsulfonyloxy group having 6 to 10 carbon atoms, an alkoxycarbonyloxy group having 2 to 7 carbon atoms, a halogen atom, CF₃, CCl₃, or CBr₃,
in an amount of 0.001 to 5 weight % based on the amount of the electrolytic solution, and an additive compound selected from the group consisting of methyl 2-propynylcarbonate, 2-propynyl methanesulfonate, 1,3-propanesultone, divinylsulfone, and 1,4-butanediol dimethanesulfonate, in an amount of 0.01 to 10 weight % based on the amount of the electrolytic solution or cyclohexylbenzene in an amount of 0.1 to 5 weight % based on the amount of the electrolytic solution.

6. The non-aqueous electrolytic solution of claim 5, in which each of R¹ and R² is an alkoxy group having 1 to 6 carbon atoms.

7. The non-aqueous electrolytic solution of claim 5 or 6, in which the substituted diphenyldisulfide derivative is bis (4-methoxyphenyl) disulfide.

8. The non-aqueous electrolytic solution of any one of claims 5 to 7, wherein the substituted diphenyldisulfide derivative is contained in the non-aqueous electrolytic solution in an amount of 0.01 to 0.7 weight % based on the amount of the electrolytic solution.

9. The non-aqueous electrolytic solution of any one of claims 5 to 8, wherein the additive is contained in the non-aqueous electrolytic solution in an amount of 0.05 to 5 weight % based on the amount of the electrolytic solution.

10. The non-aqueous electrolytic solution of any one of claims 5 to 9, which contains LiPF₆ , LiBF₄, LiClO₄, LiN (SO₂CF₂)₂, LiN(SO₂C₂F₅)₂, LiC(SO₂CF₃)₃, LiPF₄(CF₃)₂, LiPF₃(CF₃)₃, LiPF₃(C₂F₅)₃, LiPF₅(iso-Q₃F₇), or LiPF₄(iso-C₃F₇)₂.

11. The non-aqueous electrolytic solution of any one of claims 5 to 10, which contains a solvent selected from the group consisting of ethylene carbonate, propylene carbonate, butylene carbonate, vinylene carbonate, dimethyl carbonate, methyl ethyl carbonate, methyl isopropyl carbonate, methyl isobutyl carbonate, diethyl carbonate, diisopropyl carbonate, diisobutyl carbonatetetrahydrofuran, 2-methyltetrahydrofuran, 1,4-dioxane, 1,2-dimethoxyethane, 1,2-diethoxyethane, 1,2-dibutoxyethane, -butyrolactone, acetonitrile, methyl propionate, and dimethylformamide.

## Patentansprüche

1. Nicht-wässriger Akkumulator, der eine positive Elektrode, eine negative Elektrode, ein Trennelement und eine Elektrolytlösung, die ein substituiertes Diphenyldisulfidderivat mit der Formel: 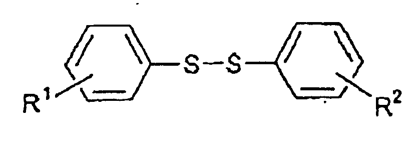 umfasst, worin jeder von R¹ und R² unabhängig eine Alkoxygruppe mit 1 bis 6 Kohlenstoffatomen, eine Alkenyloxygruppe mit 2 bis 6 Kohlenstoffatomen, eine Alkinyloxygruppe mit 2 bis 6 Kohlenstoffatomen, ein Cycloalkyloxy mit 3 bis 6 Kohlenstoffatomen, eine Aryloxygruppe mit 6 bis 12 Kohlenstoffatomen, eine Aralkyloxygruppe mit 7 bis 15 Kohlenstoffatomen, eine Acyloxygruppe mit 2 bis 7 Kohlenstoffatomen, eine Alkansulfonyloxygruppe mit 1 bis 7 Kohlenstoffatomen, eine Arylsulfonyloxygruppe mit 6 bis 10 Kohlenstoffatomen, eine Alkoxycarbonyloxygruppe mit 2 bis 7 Kohlenstoffatomen, ein Halogenatom, CF₃, CCl₃ oder CBr₃ bedeutet,
in einer Menge von 0,001 bis 5 Gew.-%, bezogen auf die Menge an Elektrolytlösung, und eine Additivverbindung, ausgewählt aus der Gruppe, bestehend aus Methyl-2-propinylcarbonat, 2-Propinylmethansulfonat, 1,3-Propansulton, Divinylsulfon und 1,4-Butandioldimethansulfonat, in einer Menge von 0,01 bis 10 Gew.-%, bezogen auf die Menge an Elektrolytlösung, oder Cyclohexylbenzol in einer Menge von 0,1 bis 5 Gew.%, bezogen auf die Menge an Elektrolytlösung, umfasst.

2. Nicht-wässriger Akkumulator nach Anspruch 1, worin jeder von R¹ und R² eine Alkoxygruppe mit 1 bis 6 Kohlenstoffatomen ist.

3. Nicht-wässriger Akkumulator nach Anspruch 1 oder 2, worin die negative Elektrode natürlichen Graphit oder künstlichen Graphit umfasst.

4. Nicht-wässriger Akkumulator nach einem beliebigen der Ansprüche 1 bis 3, worin der natürliche oder künstliche Graphit eine Kristallebene von (002) mit einem Ebenen-Abstand bezüglich d₀₀₂ mit einer Länge von 0,335 bis 0,340 nm hat.

5. Nicht-wässriger Akkumulator, enthaltend ein substituiertes Diphenyldisulfidderivat mit der folgenden Formel: 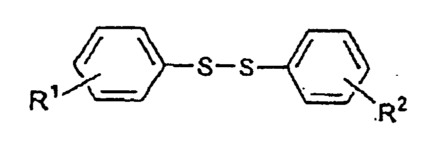 worin jeder von R¹ und R² unabhängig eine Alkoxygruppe mit 1 bis 6 Kohlenstoffatomen, eine Alkenyloxygruppe mit 2 bis 6 Kohlenstoffatomen, eine Alkinyloxygruppe mit 2 bis 6 Kohlenstoffatomen, ein Cycloalkyloxy mit 3 bis 6 Kohlenstoffatomen, eine Aryloxygruppe mit 6 bis 12 Kohlenstoffatomen, eine Aralkyloxygruppe mit 7 bis 15 Kohlenstoffatomen, eine Acyloxygruppe mit 2 bis 7 Kohlenstoffatomen, eine Alkansulfonyloxygruppe mit 1 bis 7 Kohlenstoffatomen, eine Arylsulfonyloxygruppe mit 6 bis 10 Kohlenstoffatomen, eine Alkoxycarbonyloxygruppe mit 2 bis 7 Kohlenstoffatomen, ein Halogenatom, CF₃, CCl₃ oder CBr₃ bedeutet,
in einer Menge von 0,001 bis 5 Gew.-%, bezogen auf die Menge an Elektrolytlösung, und eine Additivverbindung, ausgewählt aus der Gruppe, bestehend aus Methyl-2-propinylcarbonat, 2-Propinylmethansulfonat, 1,3-Propansulton, Divinylsulfon und 1,4-Butandioldimethansulfonat, in einer Menge von 0,01 bis 10 Gew.-%, bezogen auf die Menge an Elektrolytlösung, oder Cyclohexylbenzol in einer Menge von 0,1 bis 5 Gew.%, bezogen auf die Menge an Elektrolytlösung.

6. Nicht-wässrige Elektrolytlösung nach Anspruch 5, worin jeder von R¹ und R² eine Alkoxygruppe mit 1 bis 6 Kohlenstoffatomen ist.

7. Nicht-wässrige Elektrolytlösung nach Anspruch 5 oder 6, worin das substituierte Diphenyldisulfidderivat Bis(4-methoxyphenyl)disulfid ist.

8. Nicht-wässrige Elektrolytlösung nach einem beliebigen der Ansprüche 5 bis 7, worin das substituierte Diphenyldisulfidderivat in der nicht wässrigen Elektrolytlösung in einer Menge von 0,01 bis 0,7 Gew.-%, bezogen auf die Menge der Elektrolytlösung, enthalten ist.

9. Nicht-wässrige Elektrolytlösung nach einem beliebigen der Ansprüche 5 bis 8, worin das Additiv in der nicht wässrigen Elektrolytlösung in einer Menge von 0,05 bis 5 Gew.-%, bezogen auf die Menge an Elektrolytlösung, enthalten ist.

10. Nicht-wässrige Elektrolytlösung nach einem beliebigen der Ansprüche 5 bis 9, die LiPF₆, LiBF₄, LiClO₄, LiN(SO₂CF₃)₂, LiN(SO₂C₂F₅)₂, LiC(SO₂CF₃)₃, LiPF₄(CF₃)₂, LiPF₃(CF₃)₃, LiPF₃(C₂F₅)₃, LiPF₅(iso-C₃F₇) oder LiPF₄(iso-C₃F₇)₂ enthält.

11. Nicht-wässrige Elektrolytlösung nach einem beliebigen der Ansprüche 5 bis 10, die ein Lösungsmittel enthält, ausgewählt aus der Gruppe, bestehend aus Ethylencarbonat, Propylencarbonat, Butylencarbonat, Vinylencarbonat, Dimethylcarbonat, Methylethylcarbonat, Methylisopropylcarbonat, Methylisobutylcarbonat, Diethylcarbonat, Diisopropylcarbonat, Diisobutylcarbonattetrahydrofuran, 2-Methyltetrahydrofuran, 1,4-Dioxan, 1,2-Dimethoxyethan, 1,2-Diethoxyethan, 1,2-Dibutoxyethan, -Butyrolacton, Acetonitril, Methylpropionat und Dimethylformamid.

## Revendications

1. Accumulateur non aqueux qui comprend une électrode positive, une électrode négative, un séparateur, et une solution électrolytique qui contient un dérivé disulfure de diphényle substitué de formule : 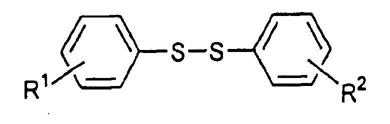 dans laquelle chacun de R¹ et R² représente indépendamment un groupe alcoxy ayant de 1 à 6 atomes de carbone, un groupe alcényloxy ayant de 2 à 6 atomes de carbone, un groupe alcynyloxy ayant de 2 à 6 atomes de carbone, un groupe cycloalkyloxy ayant de 3 à 6 atomes de carbone, un groupe aryloxy ayant de 6 à 12 atomes de carbone, un groupe aralkyloxy ayant de 7 à 15 atomes de carbone, un groupe acyloxy ayant de 2 à 7 atomes de carbone, un groupe alcanesulfonyloxy ayant de 1 à 7 atomes de carbone, un groupe arylsulfonyloxy ayant de 6 à 10 atomes de carbone, un groupe alcoxycarbonyloxy ayant de 2 à 7 atomes de carbone, un atome d'halogène, CF₃, CCl₃ ou CBr₃,
en une quantité de 0,001 à 5 % en poids par rapport à la quantité de la solution électrolytique, et un composé additif choisi dans le groupe constitué par le 2-propynylcarbonate de méthyle, le méthanesulfonate de 2-propynyle, la 1,3-propanesultone, la divinylsulfone, et le diméthanesulfonate de 1,4-butanediol, en une quantité de 0,01 à 10 % en poids par rapport à la quantité de la solution électrolytique, ou du cyclohexylbenzène en une quantité de 0,1 à 5 % en poids par rapport à la quantité de la solution électrolytique.

2. Accumulateur non aqueux selon la revendication 1, dans lequel chacun de R¹ et R² est un groupe alcoxy ayant de 1 à 6 atomes de carbone.

3. Accumulateur non aqueux selon la revendication 1 ou 2, dans lequel l'électrode négative comprend du graphite naturel ou du graphite artificiel.

4. Accumulateur non aqueux selon l'une quelconque des revendications 1 à 3, dans lequel le graphite naturel ou artificiel a un plan réticulaire (002) ayant une distance entre plans, en termes de d₀₀₂, correspondant à une longueur de 0,335 à 0,340 nm.

5. Solution électrolytique non aqueuse contenant un dérivé disulfure de diphényle substitué de formule suivante : 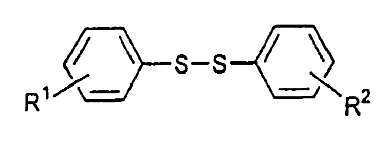 dans laquelle chacun de R¹ et R² représente indépendamment un groupe alcoxy ayant de 1 à 6 atomes de carbone, un groupe alcényloxy ayant de 2 à 6 atomes de carbone, un groupe alcynyloxy ayant de 2 à 6 atomes de carbone, un groupe cycloalkyloxy ayant de 3 à 6 atomes de carbone, un groupe aryloxy ayant de 6 à 12 atomes de carbone, un groupe aralkyloxy ayant de 7 à 15 atomes de carbone, un groupe acyloxy ayant de 2 à 7 atomes de carbone, un groupe alcanesulfonyloxy ayant de 1 à 7 atomes de carbone, un groupe arylsulfonyloxy ayant de 6 à 10 atomes de carbone, un groupe alcoxycarbonyloxy ayant de 2 à 7 atomes de carbone, un atome d'halogène, CF₃, CCl₃ ou CBr₃,
en une quantité de 0,001 à 5 % en poids par rapport à la quantité de la solution électrolytique, et un composé additif choisi dans le groupe constitué par le 2-propynylcarbonate de méthyle, le méthanesulfonate de 2-propynyle, la 1,3-propanesultone, la divinylsulfone, et le diméthanesulfonate de 1,4-butanediol, en une quantité de 0,01 à 10 % en poids par rapport à la quantité de la solution électrolytique, ou du cyclohexylbenzène en une quantité de 0,1 à 5 % en poids par rapport à la quantité de la solution électrolytique.

6. Solution électrolytique non aqueuse selon la revendication 5, dans laquelle chacun de R¹ et R² est un groupe alcoxy ayant de 1 à 6 atomes de carbone.

7. Solution électrolytique non aqueuse selon la revendication 5 ou 6, dans laquelle le dérivé disulfure de diphényle substitué est le disulfure de bis(4-méthoxyphényle).

8. Solution électrolytique non aqueuse selon l'une quelconque des revendications 5 à 7, dans laquelle le dérivé disulfure de diphényle substitué est présent dans la solution électrolytique non aqueuse en une quantité de 0,01 à 0,7 % en poids par rapport à la quantité de la solution électrolytique.

9. Solution électrolytique non aqueuse selon l'une quelconque des revendications 5 à 8, dans laquelle l'additif est présent dans la solution électrolytique non aqueuse en une quantité de 0,05 à 5 % en poids par rapport à la quantité de la solution électrolytique.

10. Solution électrolytique non aqueuse selon l'une quelconque des revendications 5 à 9, qui contient LiPF₆, LiBF₄, LiClO₄, LiN(SO₂CF₃)₂, LiN(SO₂C₂F₅)₂, LiC(SO₂CF₃)₃, LiPF₄(CF₃)₂, LiPF₃(CF₃)₃, LiPF₃(C₂F₅)₃, LiPF₅(iso-C₃F₇), ou LiPF₄(iso-C₃F₇)₂.

11. Solution électrolytique non aqueuse selon l'une quelconque des revendications 5 à 10, qui contient un solvant choisi dans le groupe constitué par le carbonate d'éthylène, le carbonate de propylène, le carbonate de butylène, le carbonate de vinylène, le carbonate de diméthyle, le carbonate de méthyléthyle, le carbonate de méthylisopropyle, le carbonate de méthylisobutyle, le carbonate de diéthyle, le carbonate de diisopropyle, le carbonate de diisobutyle, le tétrahydrofurane, le 2-méthyltétrahydrofurane, le 1,4-dioxane, le 1,2-diméthoxyéthane, le 1,2-diéthoxyéthane, le 1,2-dibutoxyéthane, la γ-butyrolactone, l'acétonitrile, le propionate de méthyle, et le diméthylformamide.
